# EUROPEAN PATENT APPLICATION

(11) **EP 4 810 944 A1**
(43) Date of publication of application: **23.09.2026**
(21) Application number: 26155859.7
(22) Date of filing: 02.02.2026
(51) Int. Cl.: G01N 21/88, G01N 21/89, G06T 7/00, B21B 38/00, G01N 21/892

(54) **ABNORMALITY DETECTING DEVICE AND ABNORMALITY DETECTING METHOD**

(30) Priority: 17.03.2025 JP 2025042007
(71) Applicant: Primetals Technologies Japan, Ltd., Hiroshima-shi, Hiroshima 733-8553 (JP)
(72) Inventor: MOCHIZUKI, Chitoshi, Hiroshima-shi, Hiroshima, 733-8553 (JP); KANEMORI, Shinya, Tokyo, 100-8332 (JP); MORINO, Tomoya, Tokyo, 100-8332 (JP)
(74) Representative: Strehl & Partner mbB

(57) **Abstract**

To provide an abnormality detecting device and an abnormality detecting method capable of detecting a rolling abnormality of a metal strip with high accuracy as compared with before. An image processing unit 92 sets a detection area 120 of a metal strip 1 for which an abnormality is to be detected from the latest image, sets a reflecting light area 101 and an enclave reflecting light area 103 reflected on the surface of the metal strip 1 and derived from illumination light illuminating the metal strip 1, sets anew an area obtained by removing the reflecting light area 101 and the enclave reflecting light area 103 from the detection area 120 as a new detection area, and sets abnormal areas 111 and 113 on the basis of the relationship of a luminance value difference between luminance data of pixels in the new detection area and a luminance reference value to detect a rolling abnormality.

## Description

### BACKGROUND OF THE INVENTION

### 1. Field of the Invention

The present invention relates to an abnormality detecting device and an abnormality detecting method.

### 2. Description of the Related Art

As an example of an abnormality detecting device and an abnormality detecting method capable of improving accuracy of detection of a rolling abnormality of a strip as compared with before, Japanese Patent No. 7025608 describes including: a camera that photographs a metal strip during rolling of the metal strip for which the rolling abnormality is to be detected; a luminance reference value setting unit that extracts the metal strip from at least one image photographed by the camera, and obtains a luminance reference value at which there is judged to be no abnormality in the metal strip from luminance data of pixels within a range of the metal strip; and an image processing unit that sets one or more of one or more photographed images as a comparison image, extracts the metal strip from each comparison image, and detects the rolling abnormality on a surface on the basis of a luminance difference between luminance data within the range of the metal strip and the luminance reference value.

### SUMMARY OF THE INVENTION

In the foregoing Japanese Patent No. 7025608, the luminance values of the colors of a normal part on the surface of the metal strip being rolled are obtained as reference values (a reference R-value, a reference G-value, and a reference B-value) in advance, the luminance values (an R-value, a G-value, and a B-value) of pixels of the image of the metal strip surface photographed by the camera during the rolling of the metal strip are obtained, respective luminance value differences are obtained by respectively subtracting the reference R-value from the R-value, the reference G-value from the G-value, and the reference B-value from the B-value, and the rolling abnormality is detected on the basis of the relationship of the luminance value differences of two components among the respective luminance value differences.

At this time, in a reflecting light area in which illumination light appears to be reflected on the strip surface, the colors of the strip surface appear to be bright, and each of the R-luminance value, the G-luminance value, and the B-luminance value is close to a maximum luminance value (255) and is quite different from the reference luminance value of the color of the normal part on the metal strip surface. Thus, processing is performed after excluding the reflecting light area in determining the rolling abnormality.

Here, the technology described in the foregoing Japanese Patent No. 7025608 determines the reference luminance values of the colors of the normal part on the metal strip surface, and identifies a part where the luminance values of the colors of the metal strip surface have a certain specific difference as compared with the reference luminance values as a rolling abnormality part, that is, a strip pinching occurrence part. A part where the illumination light is reflected on the strip surface, that is, a part referred to as a reflecting light area is judged not to be the strip pinching occurrence part, and is excluded from the determination of the rolling abnormality part.

Of these parts, the part where the illumination light is reflected on the strip surface appears along a strip width direction mainly in a curved part of the strip at a looper part.
The area is therefore referred to as a reflecting light area, and this lump of area is excluded from the determination of the rolling abnormality part.

However, a result of repeated diligent investigation by the present inventor et al. has made it clear that there is a case where a part other than the reflecting light area, for example, a part where the reflection of the illumination light occurs as in a case of an enclave occurs on the strip surface.

In the technology described in Japanese Patent No. 7025608, the enclave is not judged to be a reflecting light area, and therefore it is observed that the part of the enclave is judged to be a rolling abnormality caused by the occurrence of strip pinching, and is thus erroneously detected in the determination of the strip pinching of the strip. It has therefore becomes clear that there is room for improvement.

The present invention provides an abnormality detecting device and an abnormality detecting method capable of detecting a rolling abnormality of a metal strip with high accuracy as compared with before.

The present invention includes a plurality of means for solving the above-described problems. To cite an example of the means, there is provided an abnormality detecting device for detecting a rolling abnormality on a surface of a metal strip rolled by a rolling mill, the abnormality detecting device including: a camera that photographs the metal strip during rolling of the metal strip for which the rolling abnormality is to be detected; a luminance reference value setting unit that extracts the metal strip from at least one image photographed by the camera, and obtains a luminance reference value at which there is judged to be no abnormality in the strip from luminance data of pixels within a range of the metal strip; and an image processing unit that sets one or more of one or more photographed images as a comparison image, extracts the metal strip from each comparison image, and detects the rolling abnormality on the basis of a luminance value difference between luminance data of pixels within the range of the metal strip extracted from the comparison image and the luminance reference value, the image processing unit setting, from a latest image, a detection area of the metal strip for which the abnormality is to be detected and setting a first area that is reflected light extending in a width direction of the metal strip and a second area that is reflected light separated from the first area as a plurality of reflecting light areas reflected on the surface of the metal strip and derived from illumination light illuminating the metal strip, and setting anew an area obtained by removing the plurality of reflecting light areas from the detection area as a new detection area, and setting an abnormal area on the basis of a relationship of a luminance value difference between luminance data of pixels in the new detection area and the luminance reference value to detect the rolling abnormality.

According to the present invention, it is possible to detect a rolling abnormality of a metal strip with high accuracy as compared with before. Problems, configurations, and effects other than those described above will be made apparent by the following description of embodiments.

### BRIEF DESCRIPTION OF THE DRAWINGS

- FIG. 1: is a schematic diagram illustrating a configuration of a rolling facility including an abnormality detecting device according to an embodiment of the present invention;
- FIG. 2: is a diagram illustrating an outline of a state in which an enclave reflecting light area has occurred on the strip surface of a metal strip in addition to a band-shaped reflecting light area;
- FIG. 3: is a diagram illustrating an outline of a state in which the enclave reflecting light area illustrated in FIG. 2 cannot be excluded, and the reflection of illumination light is erroneously detected as indicating the occurrence of strip pinching of the strip;
- FIG. 4: is a diagram of assistance in explaining a flow of a method of calculating abnormal areas on the basis of reflecting light areas in the abnormality detecting device according to the embodiment;
- FIG. 5: is a diagram of assistance in explaining the flow of the method of calculating the abnormal areas on the basis of the reflecting light areas in the abnormality detecting device according to the embodiment;
- FIG. 6: is a diagram illustrating an example of chromaticities on a normal strip surface of the metal strip;
- FIG. 7: is a diagram of assistance in explaining the flow of the method of calculating the abnormal areas on the basis of the reflecting light areas in the abnormality detecting device according to the embodiment; and
- FIG. 8: is a flowchart of abnormality determination processing in the abnormality detecting device according to the embodiment.

### DESCRIPTION OF THE PREFERRED EMBODIMENTS

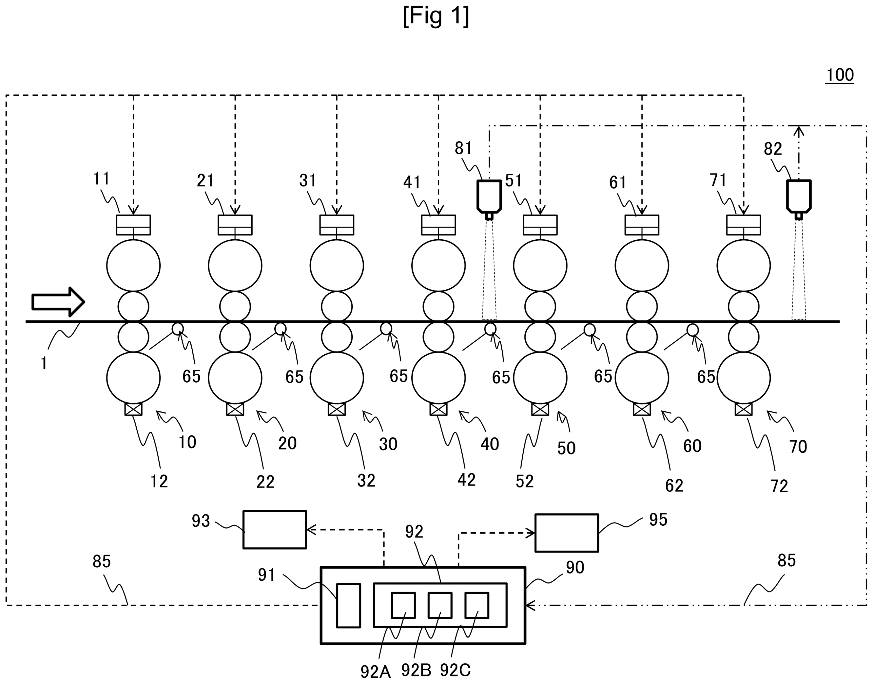

An embodiment of an abnormality detecting device and an abnormality detecting method according to the present invention will be described with reference to FIGS. 1 to 8. Incidentally, in the drawings used in the present specification, identical or corresponding constituent elements are given identical or similar reference numerals, and a repeated description of these constituent elements may be omitted.

Incidentally, a metal strip of a rolling target material in the present invention is generally a metal strip of a metallic material capable of being rolled. The kind of the metal strip is not particularly limited. A nonferrous material such as aluminum or copper can be used as the metal strip in addition to a steel strip.

A general configuration of a rolling facility including the abnormality detecting device and a configuration of the abnormality detecting device will first be described with reference to FIG. 1. FIG. 1 is a schematic diagram illustrating a configuration of the abnormality detecting device according to the present embodiment and the rolling facility including the same.

The rolling facility 100 illustrated in FIG. 1 is a finish rolling facility for rolling a metal strip 1. The rolling facility 100 includes an F1 rolling mill stand 10, an F2 rolling mill stand 20, an F3 rolling mill stand 30, an F4 rolling mill stand 40, an F5 rolling mill stand 50, an F6 rolling mill stand 60, an F7 rolling mill stand 70, cameras 81 and 82, loopers 65 for tension control, an image processing computer 90, a database 93, a display device 95, and the like.

Of these, the cameras 81 and 82 and the image processing computer 90 constitute the abnormality detecting device that detects a rolling abnormality on the surface of the metal strip 1 rolled by rolling mills.

It is to be noted that the rolling facility 100 is not limited to the configuration in which seven rolling mill stands are provided as illustrated in FIG. 1, but at least one rolling mill stand or more suffice.

Each of the F1 rolling mill stand 10, the F2 rolling mill stand 20, the F3 rolling mill stand 30, the F4 rolling mill stand 40, the F5 rolling mill stand 50, the F6 rolling mill stand 60, and the F7 rolling mill stand 70 is a rolling mill including a top work roll and a bottom work roll, a top backup roll and a bottom backup roll supporting the top work roll and the bottom work roll by being in contact with the top work roll and the bottom work roll, respectively, a roll gap cylinder 11, 21, 31, 41, 51, 61, or 71 provided to an upper portion of the top backup roll, and a load detector 12, 22, 32, 42, 52, 62, or 72. Incidentally, a six-high configuration can be adopted in which a top and a bottom intermediate roll are further provided respectively between the respective top and bottom work rolls and the respective top and bottom backup rolls. The roll configuration of the rolling mill is not limited to the above-described configuration, but at least the top and bottom work rolls suffice.

The loopers 65 are tension control rolls on a rolling line. The rolls are installed with rotating shafts thereof extending in the width direction of the metal strip 1, and are respectively provided between the F1 rolling mill stand 10 and the F2 rolling mill stand 20, between the F2 rolling mill stand 20 and the F3 rolling mill stand 30, between the F3 rolling mill stand 30 and the F4 rolling mill stand 40, between the F4 rolling mill stand 40 and the F5 rolling mill stand 50, between the F5 rolling mill stand 50 and the F6 rolling mill stand 60, and between the F6 rolling mill stand 60 and the F7 rolling mill stand 70 so as to be able to change line tension by lifting the metal strip 1 upward or lowering the metal strip 1 downward in a vertical direction. Incidentally, the loopers 65 may also have a function of a strip shapemeter that detects a tension distribution in a strip width direction.

The camera 81 is provided in a position of being able to photograph an image including the metal strip 1 on the exit side of the F4 rolling mill stand 40 and the entry side of the F5 rolling mill stand 50. For example, the camera 81 photographs the image including the metal strip 1 from directly above the metal strip 1 or obliquely from above the metal strip 1, for example, at intervals shorter than 0.1 seconds, preferably in a moving image format. The data of the image photographed by the camera 81 is transmitted to the image processing computer 90 via a communication line 85.

The camera 82 is provided in a position of being able to photograph an image including the metal strip 1 on the exit side of the F7 rolling mill stand 70. As with the camera 81, the camera 82 photographs the image including the metal strip 1 for which a rolling abnormality is to be detected from directly above the metal strip 1 or obliquely from above the metal strip 1, for example, at intervals shorter than 0.1 seconds. The data of the image photographed by the camera 82 is also transmitted to the image processing computer 90 via the communication line 85.

These cameras 81 and 82 perform a photographing step of photographing the metal strip 1 during the rolling of the metal strip 1 for which a rolling abnormality is to be detected.

In the present embodiment, suppose that these cameras 81 and 82 photograph the metal strip 1 at different times during the rolling of one roll constituting the metal strip 1 for which an abnormality is to be detected.

Incidentally, while a description will be made of a case where cameras are provided at two positions, that is, on the exit side of the F4 rolling mill stand 40 and the entry side of the F5 rolling mill stand 50 and on the exit side of the F7 rolling mill stand 70, it suffices to provide a camera at at least one position, and one camera or two or more cameras can be used, and may be provided between all of the rolling mill stands or on the entry side or the exit side of the rolling facility 100.

An illumination device 67, which is not illustrated, illuminates the metal strip 1, particularly the metal strip 1 in a range photographed by the cameras 81 and 82. The illumination device 67 can be an ordinary illumination facility disposed as appropriate on a ceiling of a rolling plant in which the rolling facility 100 is installed or the like. However, a dedicated illumination device may be used.

The image processing computer 90 is a device constituted by a computer or the like that controls the operation of apparatuses within the rolling facility 100. The image processing computer 90 includes a luminance reference value setting unit 91, an image processing unit 92, and the like.

The luminance reference value setting unit 91 is a part that extracts the metal strip 1 from at least one image photographed by the cameras 81 and 82, and obtains a luminance reference value at which there is judged to be no abnormality in the strip from the luminance data of pixels within the range of the metal strip 1. The luminance reference value setting unit 91 is an execution entity of a luminance reference value setting step. When the cameras 81 and 82 photograph moving images, the luminance reference value setting unit 91 extracts an image from the moving images.

The image processing unit 92 is a part that sets one or more of one or more photographed images as a comparison image, extracts the metal strip 1 from each comparison image, and detects a rolling abnormality on the basis of a luminance value difference between the luminance data of pixels within the range of the metal strip 1 extracted from the comparison image and the luminance reference value. The image processing unit 92 is an execution entity of an image processing step. The image processing unit 92 includes a detection area setting unit 92A, a reflecting light area setting unit 92B, an abnormal area setting unit 92C, and the like. Preferably, the comparison image processed by the image processing unit 92 is basically a latest image.

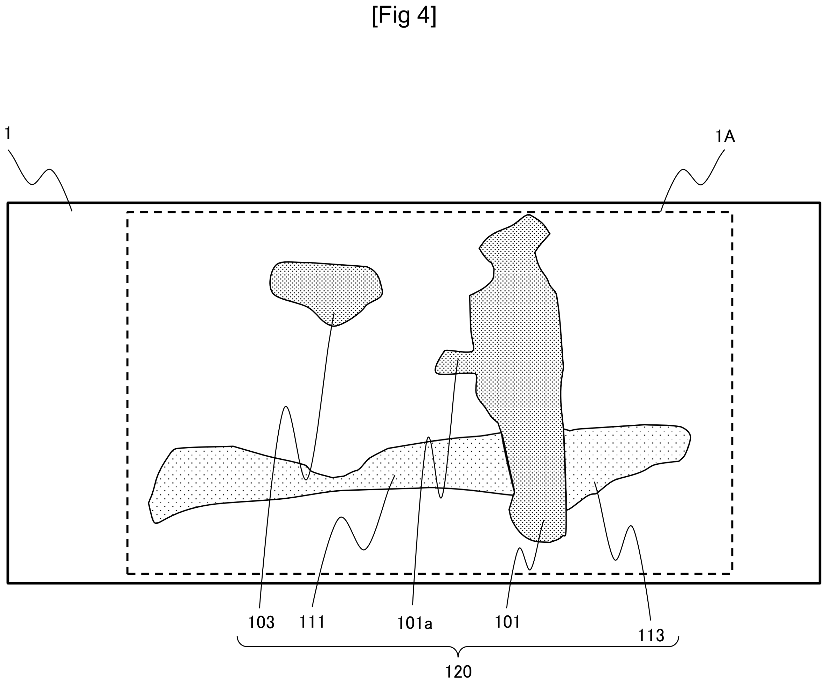

The detection area setting unit 92A is a part that sets a detection area 120 (see FIG. 4) of the metal strip 1 for which an abnormality is to be detected from the latest image.

The reflecting light area setting unit 92B is a part that sets a reflecting light area 101 and an enclave reflecting light area 103 (see FIG. 4) that are reflected on the surface of the metal strip 1 and are derived from illumination light illuminating the metal strip 1.

The abnormal area setting unit 92C is a part that sets anew an area obtained by removing the reflecting light area 101 and the enclave reflecting light area 103 from the detection area 120 as a new detection area, and sets abnormal areas 111 and 113 on the basis of the relationship of a luminance value difference between the luminance data of pixels in the new detection area and the luminance reference value to detect a rolling abnormality.

Details of processing in the luminance reference value setting unit 91, the image processing unit 92, the detection area setting unit 92A, the reflecting light area setting unit 92B, and the abnormal area setting unit 92C will be described later.

The database 93 is a storage device that stores information in which a threshold boundary dividing a normal value and an abnormal value from each other is obtained in advance from a distribution obtained by plurally plotting the luminance value difference of another component with respect to the luminance value difference of one component in a two-dimensional graph of the two components among the luminance values of an R (red) value, a G (green) value, and a B (blue) value possessed by pixels within the range of the metal strip 1 in the image in which the metal strip 1 appears. The database 93 is preferably constituted by an SSD, an HDD, or the like.

The display device 95 is a display apparatus such as a display and an audio apparatus such as an alarm. The display device 95 is, for example, a device for notifying an operator of the occurrence of a strip shape abnormality and work for handling the strip shape abnormality when the image processing computer 90 determines that the strip shape abnormality has occurred. Thus, a display is often used as the display device 95.

During operation, the operator checks the presence or absence of a rolling abnormality such as a rolling strip pinching phenomenon by visually checking a display screen of the display device 95, each rolling mill stand itself, and states between the rolling mill stands. For example, the operator checks display indicating that a rolling strip pinching phenomenon has occurred on the display device 95. Then, when an operation to be performed, such as a roll bending correction, a leveling correction, a roll speed correction, or the opening of a roll gap of a downstream rolling mill stand is displayed, the operator can avoid a transition of a state to a further deteriorated state from the state of the rolling abnormality by manually performing an operation according to the instruction.

Incidentally, a configuration can be adopted in which the occurrence of an abnormality such as the occurrence of a rolling strip pinching phenomenon is displayed to the operator on the display screen of the display device 95, and a correcting or stopping signal for avoiding the rolling abnormality is transmitted to a rolling mill control device to perform a rolling abnormality avoiding operation by automatic control, or a configuration can be adopted in which various kinds of correcting operations or a stopping operation is performed by automatic control without display on the display device 95.

Incidentally, the image processing computer 90, the database 93, and the rolling mill control device described above can be constituted by a computer having the display device 95 such as a liquid crystal display to be described later, an input device, a storage device, a CPU, a memory, and the like. These may be constituted by one computer, and may be constituted by respective different computers. There is thus no particular limitation.

The control of the operation of apparatuses by the image processing computer 90 and the rolling mill control device is performed on the basis of various kinds of programs recorded in the storage device. Incidentally, the processing of the operation control performed by the image processing computer 90 and the rolling mill control device may be integrated in one program, or respective pieces of the processing may be separated in a plurality of programs, or there may be a combination thereof. In addition, a part or all of the programs may be implemented by dedicated hardware, or may be modularized.

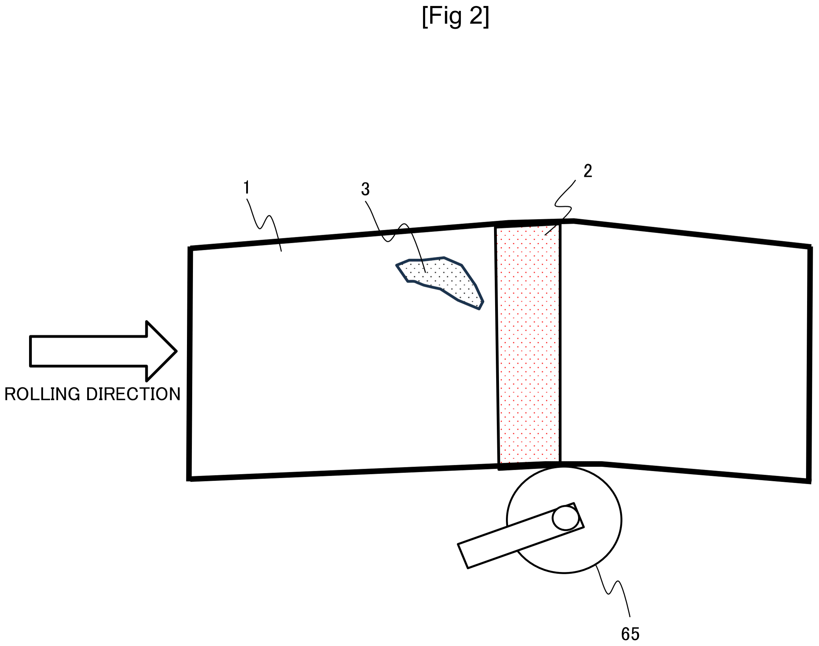

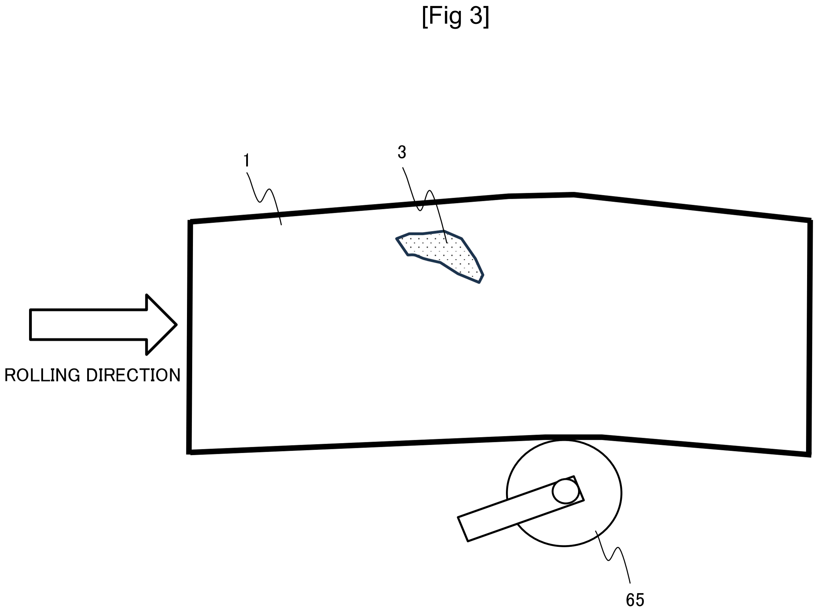

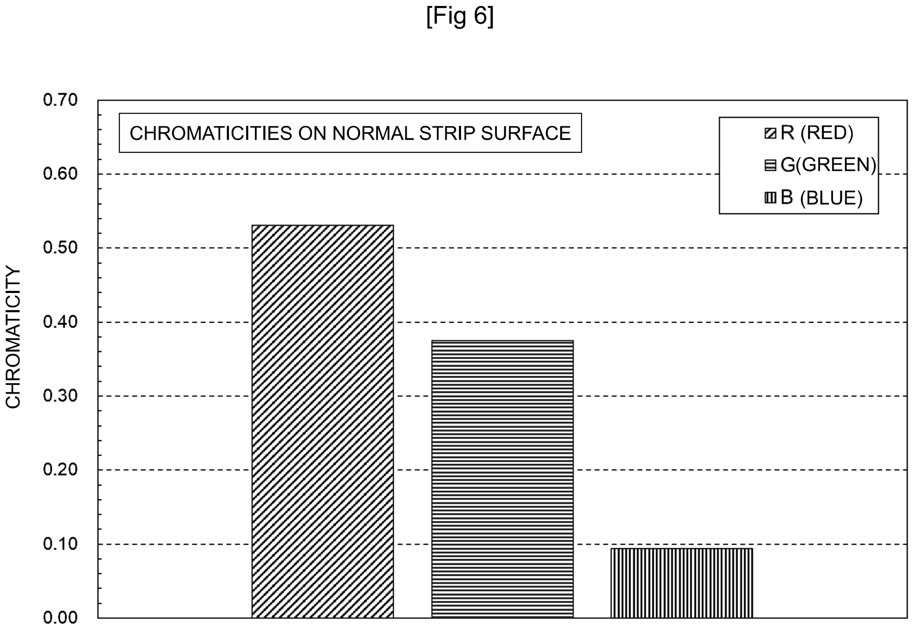

A concrete example of abnormality detection processing for determining a strip shape abnormality of the rolled metal strip 1 in the present invention will next be described with reference to FIGS. 2 to 7. FIG. 2 is a diagram illustrating an outline of a state in which an enclave reflecting light area has occurred on the strip surface of the metal strip in addition to a band-shaped reflecting light area. FIG. 3 is a diagram illustrating an outline of a state in which the enclave reflecting light area illustrated in FIG. 2 cannot be excluded, and the reflection of the illumination light is erroneously detected as indicating the occurrence of strip pinching of the strip. FIG. 4, FIG. 5, and FIG. 7 are diagrams of assistance in explaining a flow of a method of calculating abnormal areas on the basis of the reflecting light areas in the abnormality detecting device according to the embodiment. FIG. 6 is a diagram illustrating an example of chromaticities on a normal strip surface of the metal strip.

In the technology described in the foregoing Japanese Patent No. 7025608, a illumination light reflecting part appearing on the strip surface of the metal strip 1 along the strip width direction mainly in a curved part of the strip at a looper 65 is referred to as a reflecting light area 2, and a part, where the color of the strip surface is quite different from a normal color, other than the reflecting light area 2 is judged to be a rolling abnormality part, that is, a strip pinching occurrence part.

However, a result of repeated diligent investigation by the present inventor et al. has made it clear that there is a case where an illumination light reflecting part, for example, an enclave reflecting light area 3 is present in addition to the area identified as the reflecting light area 2, as illustrated in FIG. 2.

This enclave reflecting light area 3 is not a rolling abnormality part. However, as illustrated in FIG. 3, the enclave reflecting light area 3 is judged not to be a reflecting light area and is thus not excluded, and is judged and processed as an abnormal part at a time of abnormality determination based on luminance values. It therefore has become clear that there is room for improvement in reliability of the abnormality determination. On the basis of this finding, the present inventor et al. conceived excluding such an enclave reflecting light area 3 as an illumination light reflecting part in addition to the band-shaped reflecting light area 2 from the determination of rolling abnormality parts, and completed the present invention.

Incidentally, also in the present invention, as in the foregoing Japanese Patent No. 7025608, the processing of determining whether or not there is a rolling abnormality part, that is, a strip pinching occurrence part after excluding the reflecting light area 2 and the enclave reflecting light area 3 is processing that obtains the luminance values of the colors of a normal part on the surface of the metal strip 1 as reference values (a reference R-value, a reference G-value, and a reference B-value) in advance, obtains the luminance values (an R-value, a G-value, and a B-value) of pixels of images of the surface of the metal strip 1 photographed by the cameras 81 and 82 during the rolling of the metal strip 1, obtains respective luminance value differences by respectively subtracting the reference R-value from the R-value, the reference G-value from the G-value, and the reference B-value from the B-value, and identifies a rolling abnormality part on the basis of the relationship of the luminance value differences of two components among the respective luminance value differences.

Details of the processing will be described in the following.

First, the cameras 81 and 82 obtain an image including the metal strip 1. Preferably, the state of the metal strip 1 is continuously photographed in a moving image format. The photographed image is output to the image processing computer 90 via the communication line 85.

The luminance reference value setting unit 91 in the image processing computer 90 distinguishes a background and an area in which the metal strip 1 is present from each other by binarization processing from the image of the metal strip 1 at a time of rolling, and extracts a range 1A of the metal strip 1 from a luminance area of a certain threshold value or higher.

Thereafter, the image processing unit 92 including the detection area setting unit 92A, the reflecting light area setting unit 92B, the abnormal area setting unit 92C, and the like performs abnormality detection processing on the extracted range 1A.

Consideration will be given to, for example, a case where as illustrated in FIG. 4, an image is photographed which includes a reflecting light area 101 having band-shaped reflected light and a projecting portion 101a extending in a rolling direction as a part thereof and an enclave reflecting light area 103 as well as abnormal areas 111 and 113 in which a rolling abnormality has occurred.

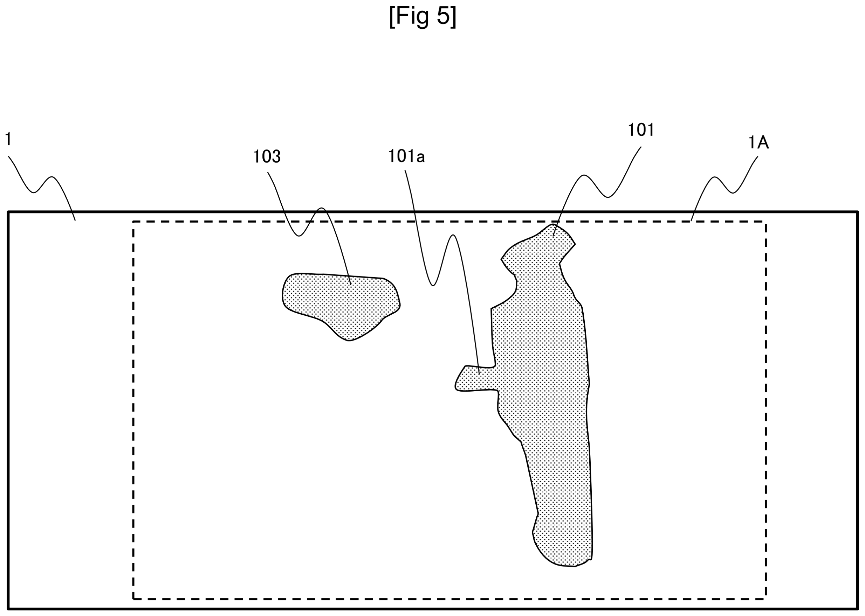

First, after the luminance reference value setting unit 91 extracts the range 1A of the metal strip 1, the image processing unit 92 extracts the reflecting light area 101 and the enclave reflecting light area 103, as illustrated in FIG. 5, by using a first predetermined reference value and a second predetermined reference value for the inside of the range 1A.

The exclusion of the reflecting light areas in the present embodiment does not exclude only a specific area referred to as a reflecting light area as in Japanese Patent No. 7025608, but treats parts in which the colors of the strip surface of the metal strip 1 appear to be bright and each of the R-luminance value, the G-luminance value, and the B-luminance value is close to a maximum luminance value (255) as illumination light reflecting parts, and excludes the illumination light reflecting parts from targets for the determination of rolling abnormality parts.

FIG. 6 illustrates the chromaticities of a normal strip surface of a hot-rolled steel strip. As illustrated in FIG. 6, it is indicated that as for the chromaticities of the normal strip surface at a time of hot rolling of the steel strip constituting the metal strip 1, the R-value (red) exhibits a highest value, while the G-value (green) and the B-value (blue) exhibit a relatively low value.

Hence, in this case, the luminance values of the G-value (green) and the B-value (blue) exhibiting the low chromaticities are checked, and when the luminance value of the G-value is equal to or more than 250, for example, it can be determined that there is an illumination light reflecting part.

Thus, in a case where the metal strip 1 is a steel strip, the image processing unit 92 can separate the luminance data of pixels within the range of the metal strip 1 extracted from the comparison image into the R-value, the G-value, and the B-value, and set parts where the luminance value of at least one component of the G-value and the B-value is equal to or more than the first predetermined reference value as a plurality of reflecting light areas.

Incidentally, the first predetermined reference value is a value set supposing that it can be reliably determined that there is an illumination light reflecting part when the luminance value of other than the R-value at high luminance is equal to or more than 250. However, "250" is a mere example, and the first predetermined reference value is preferably changed and set as appropriate according to the operation environment of the rolling facility after investigation in an operation preparatory stage of the rolling facility.

In addition, in hot rolling of the metal strip 1 that is other than a steel strip, a chromaticity distribution that is not the same as in FIG. 6 is obtained. Therefore, in that case, it is preferable to determine that there is an illumination light reflecting part under a condition that each of the respective luminance values of R (red), G (green), and B (blue) is equal to or more than 250, for example.

Thus, in a case where the metal strip 1 is other than a steel strip, that is, where the metal strip 1 is, for example, aluminum, copper, or the like, the image processing unit 92 can separate the luminance data of pixels within the range of the metal strip 1 extracted from the comparison image into the R-value, the G-value, and the B-value, and set parts in which the luminance values of all of the components of the R-value, the G-value, and the B-value are equal to or more than the second predetermined reference value, as a plurality of reflecting light areas. Incidentally, as with the first predetermined reference value, "250" as the second predetermined reference value is also a mere example, and the second predetermined reference value is also preferably changed and set as appropriate according to the operation environment of the rolling facility and the kind of the metal strip 1 as a rolling target after investigation in an operation preparatory stage of the rolling facility.

Thus, the image processing unit 92 can set, as a plurality of reflecting light areas, the reflecting light area 101 as reflected light extending in the width direction of the metal strip 1 and the enclave reflecting light area 103 as reflected light separated from the reflecting light area 101.

Here, an investigation by the present inventor et al. has found that the enclave reflecting light area 103 is very often present on the upstream side of the reflecting light area 101 in the rolling direction. Hence, by making a setting while assuming that the enclave reflecting light area 103 is present on the upstream side of the reflecting light area 101 in the rolling direction, it is possible to make provision of narrowing a search area, or the like, and consequently achieve an increase in speed of the processing.

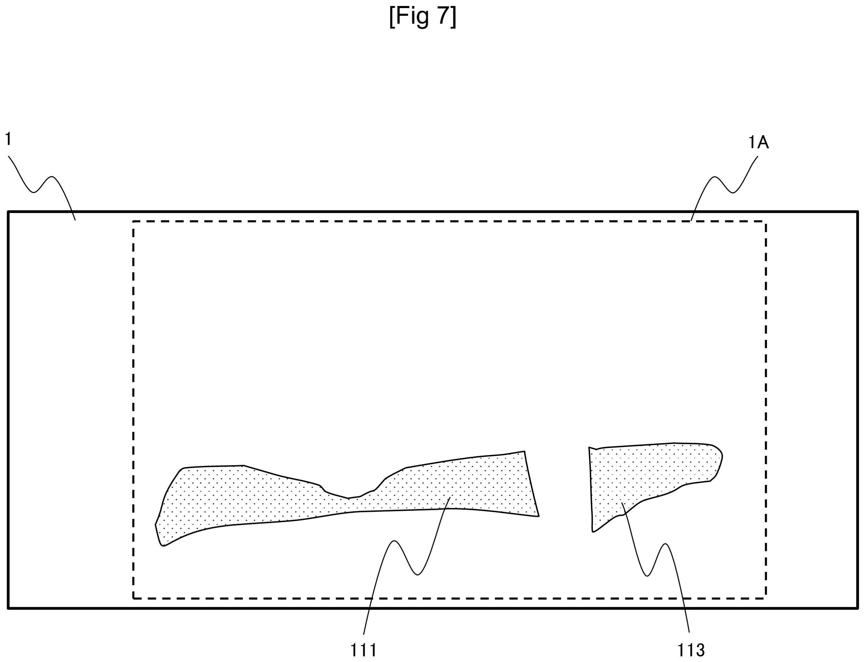

Thus, as illustrated in FIG. 7, only a true abnormal area (area relatively long in a transportation direction) is extracted. The abnormal area setting unit 92C thereafter sets the detected true abnormal area as the abnormal areas 111 and 113. A transition is then made to final detection processing as to whether or not a rolling abnormality is detected.

Incidentally, the processing of setting the detection area 120 of the metal strip 1 for which an abnormality is to be detected and the processing of setting the plurality of reflecting light areas 101 and the enclave reflecting light area 103 reflected on the surface of the metal strip 1 and derived from the illumination light illuminating the metal strip 1 are in no particular order and may be performed in parallel with each other, or either may be performed first. There is thus no particular limitation.

The image processing unit 92 thereafter determines that a rolling abnormality has occurred in the metal strip 1 when a total value of the areas of the abnormal areas set by removing the reflecting light areas derived from the illumination device 67 or a maximum length of the abnormal areas in the rolling direction is larger than a respective specific threshold value, according to the method described in Japanese Patent No. 7025608 or the like.

Incidentally, the extracted range 1A may include an area slightly inward or slightly outward of the actually existing strip area, and does not necessarily need to coincide with the metal strip 1.

In addition, the luminance reference value setting unit 91 in the image processing computer 90 obtains a luminance distribution of pixels inside the range 1A of the metal strip 1 from one selected image, and calculates luminance reference values at which there is judged to be no abnormality in the strip. Suppose here that the luminance reference value setting unit 91 separates the luminance data into the three components of the R-value, the G-value, and the B-value, and obtains three values, that is, the reference R-value (R0 value), the reference G-value (G0 value), and the reference B-value (B0 value) as the luminance reference values.

Incidentally, two values among the luminance reference values (combination of either the R0 value and the G0 value, the R0 value and the B0 value, or the B0 value and the G0 value) may be obtained.

In addition, a configuration can be adopted in which the luminance reference value setting unit 91 processes the luminance data on a gray scale of 8 bits (256 gray levels), 16 bits (65536 gray levels), or the like. Also in the case of the gray scale, subsequent processing is basically the same, and details thereof will be omitted.

The processing at a time of obtaining the three values, that is, the reference R-value (R0 value), the reference G-value (G0 value), and the reference B-value (B0 value) as the luminance reference values includes a method of selection from one image and a method of selection from a plurality of images. As for details thereof, the method described in Japanese Patent No. 7025608 or the like can be used, and the details will be omitted.

The image processing unit 92 thereafter detects a rolling abnormality on the basis of the relationship of the luminance value differences of two components among the respective luminance value differences. Abnormality determination methods include two kinds of methods: (i) a determination based on the relationship of the luminance value differences of the two components (using a threshold value as a specific value); and (ii) a determination based on the relationship of the luminance value differences of the two components (using an arbitrary threshold boundary). Also as for details thereof, the method described in Japanese Patent No. 7025608 or the like can be used, and the details will be omitted.

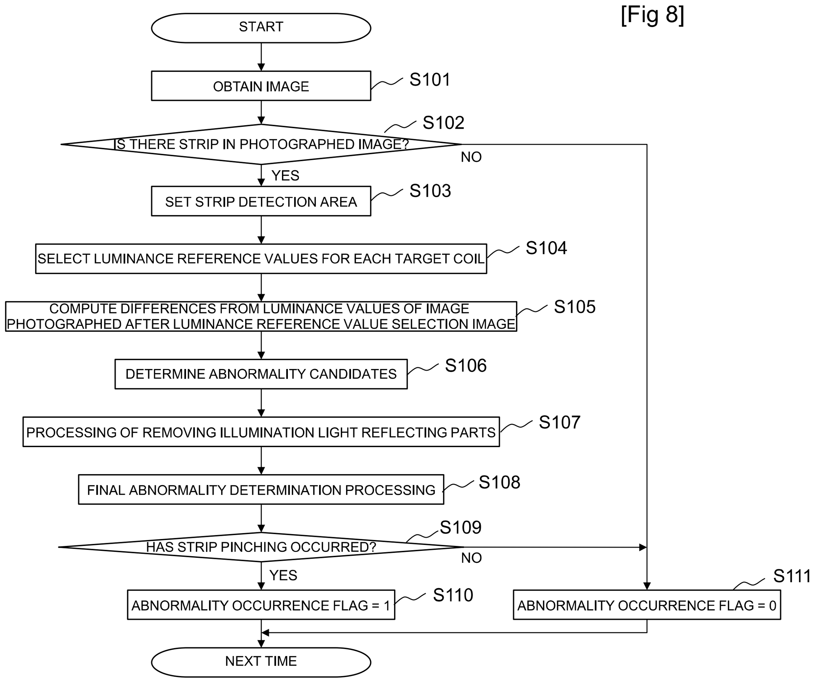

The abnormality detecting method for detecting an abnormality on the surface of the metal strip 1 rolled by the rolling mills according to the present embodiment will next be described with reference to FIG. 8. FIG. 8 is a flowchart of abnormality determination processing in the abnormality detecting device according to the embodiment.

First, as illustrated in FIG. 8, the cameras 81 and 82 obtain an image (step S101). This step S101 corresponds to the photographing step. Suppose that step S101 preferably photographs a moving image.

Next, the luminance reference value setting unit 91 of the image processing computer 90 determines whether or not the metal strip 1 is present in the image photographed in step S101 (step S102). The processing is advanced to step S103 when it is determined that the metal strip 1 is present, while the processing is advanced to step S111 when it is determined that the metal strip 1 is not present.

The luminance reference value setting unit 91 thereafter sets a strip detection area (step S103), and then selects luminance reference values for each target coil (step S104). These steps S103 and S104 correspond to the luminance reference value setting step.

Next, the image processing unit 92 of the image processing computer 90 obtains differences from the luminance values of a comparison image photographed after the luminance reference value selection image (step S105), and determines abnormality candidates (step S106). In addition, the image processing unit 92 performs processing of removing reflecting light areas derived from the illumination device 67 (step S107). Incidentally, as described above, this step S106 and step S107 are in no particular order. Either of the steps may be performed first, or the steps may be processed in parallel with each other.

Thereafter, the image processing unit 92 performs final abnormality determination processing (step S108), and determines whether or not a rolling abnormality such as strip pinching has occurred (step S109). The processing is advanced to step S110 when it is determined that an abnormality has occurred. The processing is advanced to step S111 when it is determined that no abnormality has occurred. These steps S105 to S109 correspond to the image processing step.

When determining in step S109 that an abnormality has occurred, the image processing unit 92 records an abnormality occurrence flag = 1 (step S110). When determining in step S102 that the metal strip 1 is not present or determining in step S109 that no abnormality has occurred, the image processing unit 92 records the abnormality occurrence flag = 0 (step S111). The processing is started again in next timing.

When the abnormality occurrence flag 1 is recorded, the image processing computer 90 makes display to that effect on the display device 95. Alternatively, intervention processing on each of the rolling mill stands 10, 20, 30, 40, 50, 60, and 70 can be performed automatically.

The processing of steps S101 to S111 described above is performed during rolling for one rolled coil, and the processing is ended at a time point where the rolling for the one rolled coil is completed.

Effects of the present embodiment will next be described.

The abnormality detecting device for detecting a rolling abnormality on the surface of the metal strip 1 rolled by a rolling mill according to the foregoing present embodiment includes: the cameras 81 and 82 (photographing step) that photograph the metal strip 1 during rolling of the metal strip 1 for which the rolling abnormality is to be detected; the luminance reference value setting unit 91 (luminance reference value setting step) that extracts the metal strip 1 from at least one image photographed by the cameras 81 and 82, and obtains a luminance reference value at which there is judged to be no abnormality in the strip from the luminance data of pixels within the range of the metal strip 1; and the image processing unit 92 (image processing step) that sets one or more of one or more photographed images as a comparison image, extracts the metal strip 1 from each comparison image, and detects the rolling abnormality on the basis of a luminance value difference between the luminance data of the pixels within the range of the metal strip 1 extracted from the comparison image and the luminance reference value, the image processing unit 92 setting, from a latest image, the detection area 120 of the metal strip 1 for which an abnormality is to be detected and setting the reflecting light area 101 and the enclave reflecting light area 103 reflected on the surface of the metal strip 1 and derived from the illumination light illuminating the metal strip 1, and setting anew an area obtained by removing the reflecting light area 101 and the enclave reflecting light area 103 from the detection area 120 as a new detection area, and setting the abnormal areas 111 and 113 on the basis of the relationship of a luminance value difference between the luminance data of pixels in the new detection area and the luminance reference value to detect the rolling abnormality.

Hence, the enclave reflecting light area 103, which may be judged to be a rolling abnormality area even though there is no rolling abnormality, can be excluded from the abnormality determination processing. It is therefore possible to achieve an improvement in accuracy of the abnormality detection processing for the metal strip 1 as compared with before.

In addition, the image processing unit 92 sets the reflecting light area 101 as reflected light extending in the width direction of the metal strip 1 and the enclave reflecting light area 103 as reflected light separated from the reflecting light area 101, as a plurality of reflecting light areas. It is therefore possible to achieve a further improvement in the accuracy of abnormality detection.

Further, the image processing unit 92 sets the enclave reflecting light area 103 while assuming that the enclave reflecting light area 103 is present on the upstream side of the reflecting light area 101 in the rolling direction. The processing of detecting the enclave reflecting light area 103 can consequently be made faster.

In addition, the image processing unit 92 separates the luminance data of the pixels within the range of the metal strip 1 extracted from the comparison image into the R-value, the G-value, and the B-value, and sets parts in which the luminance value of at least one component of the G-value and the B-value is equal to or more than the first predetermined reference value as the plurality of reflecting light areas. It is thereby possible to extract the reflecting light areas with very high accuracy in a case where the metal strip 1 is a steel strip.

Further, the image processing unit 92 separates the luminance data of the pixels within the range of the metal strip 1 extracted from the comparison image into the R-value, the G-value, and the B-value, and sets parts in which the luminance values of all components of the R-value, the G-value, and the B-value are equal to or more than the second predetermined reference value as the plurality of reflecting light areas. It is thereby possible to extract the reflecting light areas with very high accuracy even in a case where the metal strip 1 is not a steel strip.

### <Others>

It is to be noted that the present invention is not limited to the foregoing embodiments, but is susceptible of various modifications and applications. The foregoing embodiments have been described in detail in order to describe the present invention in an easily understandable manner, and are not necessarily limited to including all of the described configurations.

### [Explanation of Symbols]

1...metal strip
1a...range
2, 101...reflecting light area (first area)
3, 103...enclave reflecting light area (second area)
10...f1 stand
11, 21, 31, 41, 51, 61, 71...roll gap cylinder
12, 22, 32, 42, 52, 62, 72...load detector
20...f2 stand
30...f3 stand
40...f4 stand
50...f5 stand
60...f6 stand
65...looper
67...illumination device
70...f7 stand
81, 82...camera
85...communication line
90...image processing computer
91...luminance reference value setting unit
92...image processing unit
92a...detection area setting unit
92b...reflecting light area setting unit
92c...abnormal area setting unit
93...database
95...display device
100... rolling facility
101a...projecting portion
111, 113...abnormal area
120...detection area

## Claims

1. An abnormality detecting device for detecting a rolling abnormality on a surface of a metal strip (1) rolled by a rolling mill, the abnormality detecting device comprising:
a camera (81, 82) that photographs the metal strip (1) during rolling of the metal strip (1) for which the rolling abnormality is to be detected;
a luminance reference value setting unit (91) configured to extract the metal strip (1) from at least one image photographed by the camera (81, 82), and obtains a luminance reference value at which there is judged to be no abnormality in the metal strip (1) from luminance data of pixels within a range of the metal strip (1); and
an image processing unit (92) configured to set one or more of one or more photographed images as a comparison image, extract the metal strip (1) from each comparison image, and detect the rolling abnormality on a basis of a luminance value difference between luminance data of pixels within the range of the metal strip (1) extracted from the comparison image and the luminance reference value, **characterized in that**
the image processing unit (92) configured to
set, from a latest image, a detection area (120) of the metal strip (1) for which the abnormality is to be detected and setting a first area (101) that is reflected light extending in a width direction of the metal strip (1) and a second area (103) that is reflected light separated from the first area (101) as a plurality of reflecting light areas reflected on the surface of the metal strip (1) and derived from illumination light illuminating the metal strip (1), and
set anew an area obtained by removing the plurality of reflecting light areas from the detection area (120) as a new detection area, and setting an abnormal area on a basis of a relationship of a luminance value difference between luminance data of pixels in the new detection area and the luminance reference value to detect the rolling abnormality.

2. The abnormality detecting device according to claim 1, wherein
the image processing unit (92) configured to set the second area (103) while assuming that the second area (103) is present on an upstream side of the first area (101) in a rolling direction.

3. The abnormality detecting device according to claim 1 or 2, wherein
the image processing unit (92) configured to separate the luminance data of the pixels within the range of the metal strip (1) extracted from the comparison image into an R-value, a G-value, and a B-value, and sets parts in which a luminance value of at least one component of the G-value and the B-value is equal to or more than a first predetermined reference value as the plurality of reflecting light areas.

4. The abnormality detecting device according to claim 1 or 2, wherein
the image processing unit (92) configured to separate the luminance data of the pixels within the range of the metal strip (1) extracted from the comparison image into an R-value, a G-value, and a B-value, and sets parts in which luminance values of all components of the R-value, the G-value, and the B-value are equal to or more than a second predetermined reference value as the plurality of reflecting light areas.

5. An abnormality detecting method for detecting a rolling abnormality on a surface of a metal strip (1) rolled by a rolling mill, the abnormality detecting method comprising:
a photographing step of photographing the metal strip (1) by a camera (81, 82) during rolling of the metal strip (1) for which the abnormality is to be detected;
a luminance reference value setting step of extracting the metal strip (1) from at least one image photographed in the photographing step, and obtaining a luminance reference value at which there is judged to be no abnormality in the metal strip (1) from luminance data of pixels within a range of the metal strip (1); and
an image processing step of setting one or more of one or more photographed images as a comparison image, extracting the metal strip (1) from each comparison image, and detecting the rolling abnormality on a basis of a luminance value difference between luminance data of pixels within the range of the metal strip (1) extracted from the comparison image and the luminance reference value,
**characterized in that** the image processing step including
setting, from a latest image, a detection area (120) of the metal strip (1) for which the abnormality is to be detected and setting a first area (101) that is reflected light extending in a width direction of the metal strip (1) and a second area (103) that is reflected light separated from the first area (101) as a plurality of reflecting light areas reflected on the surface of the metal strip (1) and derived from illumination light illuminating the metal strip (1), and
setting anew an area obtained by removing the plurality of reflecting light areas from the detection area (120) as a new detection area, and setting an abnormal area on a basis of a relationship of a luminance value difference between luminance data of pixels in the new detection area and the luminance reference value to detect the rolling abnormality.
